# EUROPÄISCHE PATENTSCHRIFT

(11) **EP 3 116 748 B1**
(45) Veröffentlichungstag und Bekanntmachung des Hinweises auf die Patenterteilung: **22.11.2017**
(21) Anmeldenummer: 15709937.5
(22) Anmeldetag: 13.03.2015
(51) Int. Cl.: B60P 1/32, B60P 1/28

(54) **SELBSTFAHRENDES NUTZFAHRZEUG MIT MULDE**
SELF-PROPELLED UTILITY VEHICLE HAVING A TROUGH
VÉHICULE UTILITAIRE AUTOMOTEUR MUNI D'UNE BENNE

(30) Priorität: 13.03.2014 DE 202014101150 U
(43) Veröffentlichungstag der Anmeldung: 18.01.2017
(73) Patentinhaber: Bergmann, Hans Hermann, 49716 Meppen (DE)
(72) Erfinder: Bergmann, Hans Hermann, 49716 Meppen (DE)
(74) Vertreter: Habbel, Ludwig
(86) Internationale Anmeldenummer: PCT/EP2015/055307
(87) Internationale Veröffentlichungsnummer: WO 2015/136079

(56) Entgegenhaltungen:
- CA-A1- 2 690 684
- US-A- 5 899 654
- US-A- 6 113 194
- US-B1- 6 189 976
- US-B1- 7 731 297

## Beschreibung

Die Erfindung betrifft ein selbstfahrendes Nutzfahrzeug nach dem Oberbegriff des Anspruchs 1.

Gattungsgemäße Nutzfahrzeuge sind aus der US 5 899 654 A bekannt. Als Selbstfahrend wird dabei im Rahmen des vorliegenden Vorschlags ein Nutzfahrzeug bezeichnet, welches eine eigene Antriebseinheit aufweist und einen Fahrerstand, sei es in Form eines im Freien angeordneten Fahrersitzes oder sei es in Form einer geschlossenen Fahrerkabine. Selbstfahrende Nutzfahrzeuge unterscheiden sich durch diesen Fahrerstand beispielsweise von Nutzfahrzeugen, die nicht selbstfahrend ausgestaltet sind und die beispielsweise als Anhänger ausgestaltet sind.

Je nach dem Ladegut und der Entladesituation kann es problematisch sein, dass ein sich aufbauender Schüttkegel der Nutzlast sich störend auswirkt. Wenn beispielsweise die Nutzlast bei hochgekippter Mulde über die Schüttkante in eine Grube abgekippt wird, sind keinerlei Behinderungen zu erwarten. Wird jedoch die Nutzlast auf den Boden abgekippt, auf dem das Nutzfahrzeug fährt, so kann der Schüttkegel, den das abgekippte Ladegut ausbildet, zu Behinderungen führen, indem das Ladegut beispielsweise um die Reifen des Nutzfahrzeugs herum "fließt".

Aber auch ohne Behinderungen des Nutzfahrzeugs selbst zu verursachen kann es nachteilig sein, wenn Ladegut in den Bereich der Reifen des Nutzfahrzeuges gerät, beispielsweise weil beim Losfahren das Fahrzeug Nutzlast, die zuvor auf den Reifen auflag, über eine längere Fahrstrecke verteilt und somit unerwünschte Verschmutzungen bewirkt.

Eine Abhilfe, indem die Mulde einfach verlängert wird und die Schüttkante, über welche das Schüttgut aus der Mulde herausfließt, dementsprechend weit verlagert wird, beim seitlichen Abkippen beispielsweise über die Reifen hinausragend angeordnet ist, ist bei einem selbstfahrenden Nutzfahrzeug problematisch, weil eine entsprechend lange Mulde die Sicht des Fahrers auf den Boden in der unmittelbaren Umgebung des Nutzfahrzeugs erheblich einschränkt. Wenn beispielsweise ein Graben verfüllt werden soll, ist es vorteilhaft, wenn das Nutzfahrzeug möglichst nah an den Graben herangefahren wird, so dass die Mulde unmittelbar in den Graben entleert werden kann und nicht etwa das Schüttgut neben dem Graben auf den Boden abgekippt wird und in einem zusätzlichen Arbeitsschritt dann in den Graben verbracht werden muss.

Um zu vermeiden, dass das Nutzfahrzeug zu nah an den Graben herangefahren wird und versehentlich in den Graben rutscht, sowie überhaupt für das präzise Rangieren und Positionieren des Nutzfahrzeugs ist die Sicht auf die Bodenfläche in unmittelbarer Umgebung des Nutzfahrzeugs daher von großer Bedeutung.

Aus der US 1 758 457 A und der US 2 146 676 A ist jeweils ein selbstfahrendes Nutzfahrzeug in Form eines LKWs bekannt, welches eine integrierte Entladehilfe aufweist. Hierzu ist am Ende der Mulde eine Schütte vorgesehen, die quer zur Längsrichtung der Mulde verläuft, an das hintere Ende der Mulde anschließt, und die wahlweise nach rechts oder nach links das Schüttgut bis zum Boden führt, so dass beispielsweise in schmalen Straßen das Anliefern von Kohlen in Haushalte ermöglicht wird. Im Unterschied zu älteren Nutzfahrzeugen, die hierzu mit ihrer jeweiligen Mulden-Schüttkante entsprechend rangiert und ausgerichtet werden müssen, können bei den gattungsgemäßen Nutzfahrzeugen derartige Positionier- oder Rangiermaßnahmen entfallen. Zu dem Zweck ist eine Bordwand der Mulde scharnierbeweglich klappbar gelagert und mit einer Schrägfläche als Rutsche versehen, welche das Schüttgut quer zur Längsrichtung der Mulde nach unten führt. An die Rutsche schließt eine Schütte zur Verlängerung der Rutsche an. Wird die Mulde angehoben, so strömt das Schüttgut zunächst aus der Mulde auf die herabgeklappte Bordwand und dort in die Rutsche, und von dort über die Schütte auf den Boden. Diese beiden bekannten Nutzfahrzeuge unterscheiden sich dadurch, dass die Schütte in dem einen Fall als separates Element mitgeführt und an die Rutsche angesetzt werden muss, und dass sie in dem anderen Fall durch teleskopierbare Elemente gebildet ist, die an der Bordwand der Mulde gehalten sind und stets an dieser Bordwand verbleiben.

Aus der US 6 189 976 B1 ist ein Nutzfahrzeug bekannt, welches als Muldenkipper ausgestaltet ist und eine Heckklappe aufweist, die geöffnet oder geschlossen werden kann. Eine Abkippschürze ist schwenkbar gelagert. Bei geschlossener Heckklappe hängt sie herab, um das Fahrzeug nicht unnötig zu verlängern, und bei geöffneter Heckklappe dient die aufwärts geschwenkte Abkippschürze dazu, den Muldenboden zu verlängern, wobei die Abkippschürze in diesem Fall etwa coplanar zu dem Muldenboden verläuft.

In einer Weiterentwicklung dazu ist es aus der US 7 731 297 B1 bekannt, dass bei geschlossener Heckklappe die Abkippschürze nicht herabhängt, sondern nach oben geschwenkt ist und als zusätzliches Verschluss- und Abdichtungsmittel für die Heckklappe dient.

Die erwähnte US 5 899 654 A schlägt eine bewegliche Platte innerhalb der Mulde vor, die als Flussinitiator bezeichnet wird und dazu dient, bei Abkippen der Mulde eine Strömung bzw. ein Rutschen des abzukippenden Transportguts auszulösen. Vorteilhaft ist diese Platte kleiner als die Muldenfläche, der sie benachbart ist, und bewegt sich in Überdeckung zu dieser Muldenwand. Allerdings kann vorgesehen sein, dass sie bei ihrem Bewegungshub auch über diese Muldenfläche hinausragt, so dass sie in diesem Fall eine Schütte bildet, über deren Rand das Transportgut aus der Mulde strömt, so dass in diesem Fall die Schütte eine Verlängerung der Mulde bildet und die wirksame Schüttkante der Mulde auf diese Weise verlagert wird.

Der Erfindung liegt die Aufgabe zugrunde, ein gattungsgemäßes Nutzfahrzeug dahingehend zu verbessern, dass dieses bei unveränderten Fahrzeugabmessungen eine problemlose, verschmutzungsarme Entleerung der Nutzlast an einer präzise definierbaren Ablagestelle ermöglicht.

Diese Aufgabe wird durch ein Nutzfahrzeug mit den Merkmalen des Anspruchs 1 gelöst. Vorteilhafte Ausgestaltungen sind in den Unteransprüchen beschrieben.

Die Erfindung schlägt mit anderen Worten vor, dass die Mulde um eine Hochachse schwenkbeweglich gelagert ist. Beispielsweise kann vorgesehen sein, dass die Mulde wahlweise in Längsrichtung des Fahrzeugs oder zur Seite gekippt und entleert werden kann. Während bei der Entladung in Fahrzeuglängsrichtung ohnehin häufig die Schüttkante der Mulde ausreichend weit vom Fahrwerk des Nutzfahrzeugs vorgesehen ist, kann insbesondere bei der seitlichen Entleerung ein Störeinfluss durch das zu nah an der Schüttkante befindliches Fahrwerk vorliegen, so dass bei einer derart schwenkbeweglichen Mulde die vorschlagsgemäße bewegliche Schütte besonders vorteilhaft ist.

Die präzise definierbare Auswahl einer gewünschten Ablagestelle ist vorschlagsgemäß besonders vielseitig möglich, da die Mulde um ihre Hochachse geschwenkt und somit in unterschiedlichen Richtungen entleert werden kann. So sind auch Abladestellen problemlos erreichbar, die ansonsten - bei einer starr ausgerichteten und lediglich kippbeweglichen Mulde - schwierige Rangier- und Positionierbewegungen des gesamten Nutzfahrzeugs erfordern würden oder aus diesem Grund sogar unzugänglich wären.

Bei einem vorschlagsgemäßen Nutzfahrzeug können die Abmessungen der Mulde variabel ausgestaltet werden. Somit wird nicht eine Richtungsumlenkung des Schüttguts bei der Entleerung der Mulde bewirkt, sondern vielmehr eine unterschiedliche Länge der Mulde in der Richtung, in welcher das Schüttgut abgekippt wird. Vielmehr ergibt sich dadurch, dass die Schütte zwischen einer eingezogenen Transportstellung und einer ausgefahrenen Entladestellung beweglich ist, eine Verlagerung der Kante, über welche das Schüttgut von dem Nutzfahrzeug herabfließt, wie dies bei einer entsprechend längeren Mulde der Fall wäre, deren Schüttkante sich an derselben Stelle befinden würde wie die entsprechende Kante der Schütte. Die vorschlagsgemäß vorgesehene Schütte bewirkt somit praktisch eine Parallelverschiebung der beim Entleeren wirksamen Kante, über welche das Schüttgut von dem Nutzfahrzeug herabströmt.

Somit werden variable Abmessungen der Mulde ermöglicht, so dass die Mulde während des Beladens und des Transports, also während der Fahrt, ihre ursprünglichen Abmessungen aufweist. Statt die Mulde dauerhaft zu verlängern, um auf diese Weise die Schüttkante weiter vom Fahrwerk des Nutzfahrzeugs zu entfernen, wenn die Mulde in ihre Entladestellung gekippt ist, werden durch diese bei Beladung und Transport unveränderten Muldenabmessungen mehrere Vorteile bewirkt:
▪ erstens wird während des Beladens das Nutzfahrzeug nicht überladen, wozu es ansonsten bei einer mittels der Schütte vergrößerten Grundfläche der Mulde leicht kommen könnte,
▪ zweitens wird vermieden, dass der Schwerpunkt des beladenen Fahrzeugs in einen fahrdynamisch gefährlichen Bereich verlagert werden kann, was ansonsten durch eine feste Schütte und die damit verbundene Verlängerung der Mulde bewirkt werden könnte,
▪ drittens kann das vorgeschriebene Sichtfeld für den Fahrzeugführer beibehalten werden, indem dies nicht durch eine entsprechend verlängerte Mulde beeinträchtigt wird, und
▪ viertens können gesetzliche Bestimmungen eingehalten werden, welche die baulichen Abmessungen des Fahrzeugs betreffen und dabei insbesondere auch die Mulde betreffen, da aufgrund der beweglichen Lagerung der Schütte die Maße der Mulde bei Beladung und Transport unverändert sind und lediglich zur Entleerung der Mulde deren für das Abkippen des Transportguts wichtigen Maße, insbesondere die Position der Schüttkante, verändert werden. Beispielsweise kann ein Maximalmaß unverändert eingehalten werden, welches einen nicht zu überschreitenden Abstand zwischen der Mitte des Lenkrades und der Vorderkante des Fahrzeugs vorschreibt. Beispielsweise gilt im Raum der EU ein solches Maximalmaß von 3.500 mm.

Diese Vorteile werden dadurch ermöglicht, dass an der Mulde die beweglich gelagerte Schütte vorgesehen ist, also eine Art Verlängerung der Mulde, welche die Schüttkante der Mulde weiter nach außen verlagert und auf diese Weise die Mulde verlängert. Während der Beladung des Nutzfahrzeugs und während des Transports befindet sich diese Schütte jedoch in einer eingezogenen, so genannten Transportstellung. Hierdurch ergibt sich für den Fahrer des Nutzfahrzeugs ein problemloser Blick auf das unmittelbare Umfeld, so dass das Nutzfahrzeug präzise rangiert und ausgerichtet werden kann, um das Schüttgut auf eine Ablagestelle zu kippen. Hierdurch ist einerseits sichergestellt, dass das Schüttgut genau dorthin gelangt, wohin es beim Entleeren der Mulde gelangen soll (beispielsweise in den weiter oben erwähnten Graben). Andererseits ist hierdurch sichergestellt, dass der Entladevorgang problemlos ablaufen kann und sichergestellt werden kann, dass das Nutzfahrzeug sich nur auf dem vorgesehenen Terrain bewegt (und beispielsweise nicht in den weiter oben erwähnten Graben gefahren wird), weil bei eingezogener Schütte aufgrund der guten Sichtverhältnisse der Fahrer abschätzen kann oder sogar unmittelbar ersehen kann, wo das Fahrzeug auf dem Boden aufsteht. Bereits während der gesamten Fahrt, noch vor Erreichen des Ablade-Orts, ist das große, nicht eingeschränkte Sichtfeld für den Fahrer vorteilhaft, um Beschädigungen am Nutzfahrzeug oder an der Umgebung während der Fahrt zu vermeiden.

Wenn die Mulde jedoch entladen werden soll, wird die Schütte in eine so genannte Entladestellung ausgefahren, in welcher sie die Mulde über das ursprünglich als Schüttkante vorgesehene Ende der Mulde bzw. über eine dort befindliche Kante der Mulde hinaus verlängert, so dass diese Kante der Mulde selbst nicht als eine Schüttkante wirksam ist, denn über diese Kante fällt das Material nicht aus der Mulde. Vielmehr bildet die Schütte die Schüttkante der Mulde. In der ausgefahrenen Entladestellung, welche die Schütte einnimmt, ist die Schüttkante der Mulde in einem größeren Abstand vom Fahrwerk des Nutzfahrzeugs angeordnet, als es durch die Kante, welche die Mulde selbst bildet, möglich wäre, wenn diese die Schüttkante bilden würde. Die Schütte verlängert in ihrer Entladestellung also die Mulde, während sie in ihrer Transportstellung die Mulde weniger weit verlängert, indem beispielsweise die Schüttkante der Schütte näher an der Kante der Mulde angeordnet ist.

Durch die Verlängerung der Mulde während ihrer Entleerung wird der oben bereits angesprochene Abstand zwischen dem Schüttkegel und dem Fahrwerk vergrößert. Zudem wird die Sicherheit während des Entladevorgangs verbessert, denn es ist beispielsweise möglich, Material aus der Mulde in einen Graben abzukippen und dabei einen größeren Abstand zum Graben einzuhalten als es ohne die Muldenverlängerung in Form der Schütte möglich wäre. Die Gefahr, dass die Böschung des Grabens nachgibt und das Fahrzeug in den Graben rutscht, ist durch den größeren Abstand vom Graben verringert.

Vorteilhaft kann vorgesehen sein, dass durch die Schütte, wenn sie sich in ihrer Transportstellung befindet, überhaupt keine Verlängerung der Mulde bewirkt wird, so dass die bereits angesprochenen Vorteile sichergestellt werden können, was den Schutz vor einer Überladung der Mulde, den Schutz vor einer Beeinträchtigung des freien Sichtfeldes, und das gesetzlich vorgegebene Maximalmaß vom Lenkrad zur vorderen Fahrzeugkante angeht. Daher kann vorgesehen sein, dass die Schütte in ihrer Transportstelle innerhalb der von der Mulde abgedeckten Grundfläche angeordnet ist und nicht über die original vorgesehenen Abmessungen der Mulde, was die Grundfläche der Mulde angeht, hinausragt.

Vorteilhaft kann vorgesehen sein, dass die Schütte unterhalb der Mulde angeordnet ist. Auf diese Weise wird eine freie Beweglichkeit der Schütte problemlos sichergestellt, da die Schütte nicht durch das Gewicht des in der Mulde befindlichen Transportguts belastet wird, während sie bewegt wird: Wenn die Mulde beladen wird, befindet sich die Schütte unterhalb der Mulde, wenn die Mulde jedoch entladen wird und dabei die Schütte in ihre Entladestellung ausgefahren ist, rutscht die Nutzlast über die Schütte hinweg, so dass anschließend, wenn nämlich die Mulde entleert worden ist, die Schütte wiederum ohne Gewichtsbelastung durch die Nutzlast problemlos aus ihrer Entladestellung in ihre Transportstellung zurückgezogen werden kann.

Im Sinne der oben beschriebenen Vorteile ist die Schütte unterhalb der Mulde angeordnet, nämlich unterhalb der Bodenfläche der Mulde, auf welcher Bodenfläche das Transportgut aufliegt. In einer ersten Ausgestaltung dieser Anordnung kann die Schütte von unten her frei zugänglich sein. In einer zweiten Ausgestaltung dieser Anordnung der Schütte kann der Boden der Mulde wenigstens bereichsweise doppelwandig ausgestaltet sein, so dass eine Art Tasche gebildet wird, in welcher die Schütte geschützt aufgenommen wird. Nach unten hin ist die Schütte ebenfalls geschützt, beispielsweise gegen Beschädigungen oder dagegen, dass Fremdkörper in Führungsschienen oder ähnliche Führungselemente gelangen und die Bewegung der Schütte behindern können.

Alternativ dazu kann allerdings vorgesehen sein, und zwar ebenfalls mit gewissen Vorteilen, dass die Schütte innerhalb der Mulde angeordnet ist. Die Antriebsmittel, die auf die Schütte einwirken, um diese zwischen ihrer eingezogenen Transportstellung und ihrer ausgefahrenen Entladestellung zu bewegen, sind in diesem Fall unterhalb der Mulde angeordnet, so dass sie einerseits mechanisch vor Beschädigungen optimal geschützt sind und andererseits das freie Nutzvolumen innerhalb der Mulde nicht verringern. Die Schütte selbst als bewegliche Fläche ist jedoch innerhalb der Mulde angeordnet, so dass auch bereits vorhandene Mulden mit vergleichsweise geringem Aufwand mit der beweglichen Schütte nachgerüstet werden können.

Diese Nachrüstungsmöglichkeit betrifft einerseits die Serienfertigung, bei welcher eine im Lieferprogramm bereits befindliche Mulde dementsprechend um die bewegliche Schütte ergänzt werden kann. Dies betrifft jedoch auch die Möglichkeit, bereits beim Anwender in Betrieb genommene Nutzfahrzeuge, insbesondere deren Mulden, mit der beweglichen Schütte nachrüsten zu können, so dass die Vorteile des vorliegenden Vorschlags in wirtschaftlich vorteilhafter Weise verwirklicht werden können, ohne dass hierzu gleich ein komplett neues Nutzfahrzeug angeschafft werden muss.

Zudem bietet die innerhalb der Mulde befindliche Schütte die Möglichkeit, an ihrer Oberseite, wo sie einen direkten Kontakt mit dem Transportgut hat, durch Profilierungen den Abzug des Transportguts aus der Mulde zu unterstützen, beispielsweise durch nach oben ragende Aufkantungen, aufgeschweißte oder aufgeschraubte Leisten, Noppen oder dergleichen. Im Unterschied zu klassischen Fördermitteln wird jedoch nicht das Transportgut näher an die Schüttkante gefördert, sondern die Profilierung wird zusammen mit der Schüttkante bewegt.

Bei Material, welches nicht leicht innerhalb der Mulde nach unten nachrutscht und auf die Schütte gelangt, kann die erwähnte Profilierung dazu dienen, eine Bewegung des Materials auf die Schütte zu unterstützen. Gegebenenfalls kann die Profilierung beweglich ausgestaltet sein, beispielsweise als eine Art Klappe, die sich flach anlegt, wenn die Schütte in die Mulde hineinfährt, und die sich automatisch aufstellt, wenn das über den Schütte befindliche Material nicht mit der Schütte zusammen aus der Mulde heraus bewegt wird, sondern in der Mulde verbleibt. Aufgrund der dabei auftretenden Reibung bei der Relativbewegung zwischen Material und Schütte stellt sich die Klappe automatisch auf, nimmt einen Anteil des Materials zusammen mit der Schütte mit und löst diesen Anteil somit von dem übrigen noch in der Mulde vorhandenen Material ab, so dass dieser Materialanteil dann weiter auf der Schütte zur Schüttkante rutscht und dort die Schütte verlässt.

Die Bewegung der Schütte kann auf unterschiedliche Weise erfolgen, wozu der Fachmann eine Mehrzahl in Frage kommender und aus der Praxis an sich bekannter Möglichkeiten kennt. Rein beispielhaft ist es möglich, über einen einzigen zentralen oder zwei parallele Spindelantriebe, über ein liegend angeordnetes Scherenhubwerk, über einen Hydromotor und eine Zahnstange, oder über einen Seilzug mit Umlenkrollen die gewünschte Bewegung der Schütte zu bewirken. Vorteilhaft jedoch kann vorgesehen sein, dass die Schütte hydraulisch zwischen ihren Transport- und Entladestellungen beweglich ist, so dass die an dem Nutzfahrzeug zum Kippen der Mulde üblicherweise ohnehin vorhandene Hydraulik mit geringem konstruktivem Aufwand um diese Antriebsmittel erweitert werden kann, welche zur Bewegung der Schütte genutzt werden.

Vorteilhaft kann die Schütte als eine Verlängerung der Mulde ausgestaltet sein, indem die Schütte längsbeweglich zwischen ihrer Transportstellung und ihrer Entladestellung hin und her bewegt werden kann. Die Mulde weist eine Bodenfläche und einen nach oben verlaufenden Rand auf. Die Verlängerung der Bodenfläche und somit die Verlagerung der beim Entleeren des Schüttguts wirksamen Kante der Mulde kann bei einer derartigen Ausgestaltung der Mulde vorteilhaft vom Fahrerstand des Nutzfahrzeugs aus erfolgen, indem die Schütte in Längsrichtung der Mulden-Bodenfläche in ihre Entladestellung verschoben wird.

Insbesondere kann vorteilhaft vorgesehen sein, dass der Rand die Bodenfläche nur an drei Seiten umgibt und an der vierten Seite kein Rand vorgesehen ist, also keine Heckklappe, klappbare Bordwand oder dergleichen als eine Art Verschlusselement, welches geöffnet und geschlossen werden muss. An dieser vierten Seite ist die Mulde vielmehr offen und weist dort ihre Schüttkante auf. Die zu dieser vierten Seite offene Mulde ermöglicht eine besonders einfache Handhabung, indem sie zum Abkippen des Schüttguts lediglich angehoben zu werden braucht, ohne dass vorher ein Verschlusselement geöffnet zu werden braucht.

Vorteilhaft kann das Nutzfahrzeug als so genannter Dumper ausgestaltet sein, da bei einem derartigen Fahrzeugtyp die vorschlagsgemäß ermöglichten Vorteile besonders stark zum Tragen kommen.

Ein Ausführungsbeispiel eines vorschlagsgemäß ausgestalteten Nutzfahrzeugs wird anhand der rein schematischen Darstellungen nachfolgend näher erläutert. Dabei zeigt
- Fig. 1: ein selbstfahrendes Nutzfahrzeug, bei dem sich die Mulde und die bewegliche Schütte jeweils in ihrer Entladestellung befinden,
- Fig. 2: eine perspektivische Ansicht auf die Mulde von Fig. 1, von der Unterseite der Mulde her,
- Fig. 3: eine perspektivische Ansicht auf die Mulde der Fig. 1 und 2 auf die Innenseite der Mulde, und
- Fig. 4: ein herkömmliches Fahrzeug, bei dem sich wie in Fig. 1 die Mulde in ihrer Entladestellung befindet.

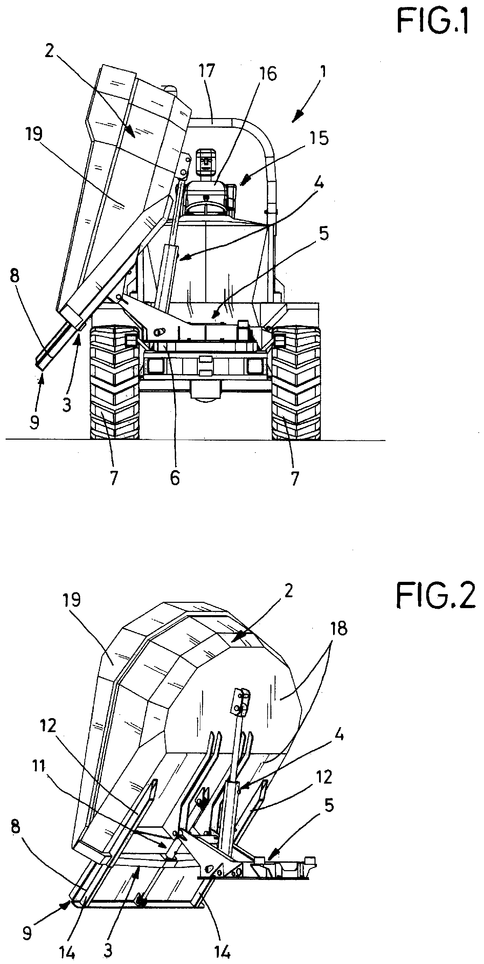

In den Zeichnungen ist mit 1 jeweils insgesamt ein selbstfahrendes Nutzfahrzeug bezeichnet, welches einen Fahrerstand 15 aufweist und bei den dargestellten Ausführungsbeispielen als so genannter Dumper ausgestaltet ist, bei dem sich eine Mulde 2 vor einem Fahrer 16 befindet. Der Fahrer 16 ist in seinem Fahrerstand 15 mittels einer Überrollsicherung 17 gesichert, die als Bügel oder Käfig ausgestaltet ist. Die Mulde 2 ist um eine Hochachse schwenkbar gelagert, so dass sie wahlweise nach vorn oder zu den beiden Seiten des Nutzfahrzeugs 1 entleert werden kann. In Fig. 1 ist das Nutzfahrzeug 1 von vorn zu sehen und die Mulde 2 um diese Hochachse um etwa 90° gedreht, so dass die Mulde 2 vom Fahrer 16 aus gesehen nach rechts und neben die rechte Seite des Nutzfahrzeugs 1 entleert wird.

Dabei weist die Mulde 2 eine eigene Schüttkante 3 auf, über welche die Nutzlast aus der Mulde 2 abfließt, wenn die Mulde 2, wie in den Zeichnungen dargestellt, in ihre Entladestellung hochgekippt ist. Hierzu weist die Mulde einen hydraulischen Kippzylinder 4 auf, der gemeinsam mit einem Muldenlager 5 auf einem Drehkranz 6 um eine aufrechte Achse schwenkbar gelagert ist.

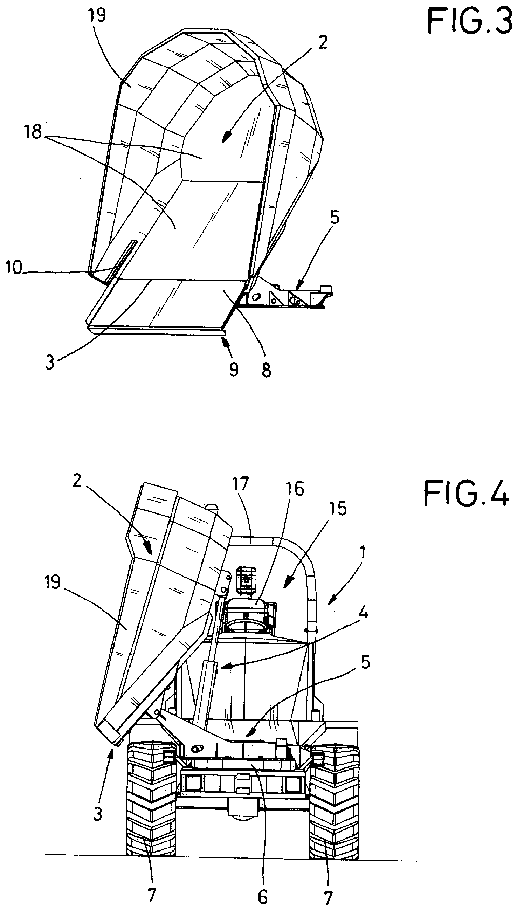

Aus Fig. 4 ist ersichtlich, dass bei einem herkömmlichen Nutzfahrzeug 1 die Schüttkante 3 der Mulde 2 vergleichsweise nah an dem Fahrwerk des Nutzfahrzeugs 1 vorgesehen ist, wenn die Mulde 2 in ihre Entladestellung gekippt ist. Bei dem dargestellten Ausführungsbeispiel ist rein beispielhaft vorgesehen, dass das Fahrwerk des Nutzfahrzeugs 1 mehrere Laufräder 7 aufweist, wobei abweichend davon auch Kettenfahrwerke vorgesehen sein können, je nach Ausgestaltung des jeweiligen Nutzfahrzeugs 1.

Im Vergleich zu Fig. 4 zeigt die Darstellung von Fig. 1, dass die Schüttkante 3 der Mulde 2 zwar an derselben Stelle angeordnet ist, die tatsächlich wirksame Schüttkante der Mulde 2 jedoch durch eine Schütte 8 weiter nach außen verlagert worden ist, so dass letztlich der Abstand einer Kante 9 der Schütte 8 im Vergleich zu der Schüttkante 3 in eine Entfernung von den Laufrädern 7 vorgesehen ist, die etwa das 2,5fache bis 3fache beträgt im Vergleich zu dem Abstand, den gemäß Fig. 4 die Schüttkante 3 von den benachbarten Laufrädern 7 aufweist.

Das in Fig. 4 dargestellte, herkömmliche Nutzfahrzeug 1 unterscheidet sich von dem vorschlagsgemäß ausgestalteten Nutzfahrzeug 1 der Fig. 1 bis 3 dadurch, dass die Mulde 2 keine über die Schüttkante 3 hinausragende Schütte 8 aufweist, und ist ansonsten wie das vorschlagsgemäße Nutzfahrzeug 1 ausgestaltet, so dass auch das vorschlagsgemäße Nutzfahrzeug 1 der Ansicht der Fig. 4 entspricht, wenn die Schütte 8 sich nicht in ihrem ausgefahrenen, sondern vielmehr in ihrem eingezogenen Zustand befindet.

Aus Fig. 3 ist ersichtlich, dass die Schütte 8 innerhalb der Mulde 2 vorgesehen ist, wobei zwei seitliche Führungsleisten 10 einerseits die Schütte 8 innerhalb der Mulde 2 führen und andererseits als Abweiser dienen, so dass von oben nachrutschendes Transportgut von den Seitenwänden der Mulde 2 auf die Fläche der Schütte 8 geleitet wird. Die Mulde 2 weist eine Bodenfläche 18 mit zwei gegeneinander abgewinkelten Abschnitten auf, sowie einen Rand 19, der sich von der Bodenfläche 18 aus nach oben. Der Rand 19 verläuft im Wesentlichen U-förmig verläuft und umgibt die Bodenfläche 18 an drei Seiten. An der vierten Seite mit der Schüttkante 3 hingegen ist kein Rand vorgesehen, sondern hier endet die Mulde 2 offen.

Aus Fig. 2 ist ersichtlich, dass die Schütte 8 mittels eines hydraulischen Schüttenzylinders 11 zwischen ihrer in den Fig. 1 bis 3 dargestellten Entladestellung und einer demgegenüber eingezogenen Transportstellung beweglich ist. Die Betätigung der Mulde 2 ist somit vollständig vom Fahrerstand 15 aus möglich, indem sowohl die Mulde 2 mittels des Drehkranzes 6 um ihre Hochachse geschwenkt werden kann, als auch mittels des Kippzylinders 4 aus ihrer Transportstellung in die Entladestellung gekippt werden kann, und wobei ebenfalls vom Fahrerstand 15 aus die Schütte 8 in ihre Entladestellung bewegt werden kann, in welcher die zum Entleeren des Schüttguts wirksame Kante der Mulde 2 von deren Schüttkante 3 zur Kante 9 der Schütte 8 verlagert ist. Auch das anschließende Zurückziehen der Schütte 8 in ihre Transportstellung, das Zurückkippen der Mulde 2 in deren Transportstellung, und das Zurückdrehen der Mulde 2 in eine Fahrstellung, in welcher die Mulde 2 in Längsrichtung des Nutzfahrzeugs 1 ausgerichtet ist und in welcher die Schüttkante 3 das vordere Ende des Nutzfahrzeug 1 darstellt, kann der Fahrer 16 von seinem Fahrerstand 15 aus durchführen. Zur Führung der Schütte 8 sind zudem an der Unterseite der Mulde 2 Führungen 12 vorgesehen, in denen Rippen 14 geführt sind, die auf der Unterseite der Schütte 8 vorgesehen sind und einerseits zur Führung der Schütte 8 dienen und andererseits die Schütte 8 auch gegen unerwünschte Durchbiegungen aussteift.

Abweichend von dem dargestellten Ausführungsbeispiel kann die Schütte 8 unterhalb der Bodenfläche 18 angeordnet sein. Dabei kann die Schütte 8 ggf. von unten frei zugänglich sein. Wenn jedoch einerseits die Abmessungen der Schütte 8 und andererseits die Position von Montagepunkten, z. B. von Gelenkpunkten der Kippmechanik, die zum Kippen der Mulde 2 vorgesehen ist, ähnlich wie bei dem dargestellten Ausführungsbeispiel gewählt ist, könnte es zu einer Kollision der Schütte 8 mit Elementen dieser Kippmechanik kommen. Um eine solche Kollision zu vermeiden, kann in einem solchen Fall der Boden der Mulde 2 doppelwandig in dem Bereich ausgestaltet sein, in dem die Schütte 8 vorgesehen ist. Die Schütte 8 ist in diesem Fall zwischen der Bodenfläche 18 und einer dazu parallelen, unteren Bodenwand der Mulde 2 angeordnet. Elemente der Kippmechanik können somit an die untere Bodenwand der Mulde 2 anschließen, und oberhalb davon kann die Schütte 8 in ihrer eingezogenen Transportstellung angeordnet sein, oder es können sich dort Führungs- oder Antriebselemente für die Schütte 8 befinden, wie beispielsweise der Schüttenzylinder 11. Oberhalb von der Schütte 8 bzw. deren Führungs- oder Antriebselementen verläuft die Bodenfläche 18 der Mulde so dass Schüttgut bzw. Transportgut, welches in der Mulde 2 liegt, die Beweglichkeit der Schütte 8 nicht behindern kann. Durch diese doppelwandige Ausgestaltung des Mulden-Bodens wird eine Art Tasche geschaffen, in der die Schütte 8 geschützt aufgenommen ist, wenn sie sich in ihrer Transportstellung befindet. Unterhalb der Schüttkante 3 ist diese Tasche offen, so dass die Schütte 8 aus der Tasche herausragen kann, wenn sie ihre Entladestellung einnimmt.

## Patentansprüche

1. Selbstfahrendes Nutzfahrzeug (1),
mit einem Fahrerstand (15),
einer die Nutzlast aufnehmenden Mulde (2),
wobei die Mulde (2) kippbar gelagert ist,
derart, dass sie zwischen einer abgesenkten Belade- und Transportstellung und einer angehobenen Entladestellung schwenkbar ist,
und wobei die Mulde (2) eine Schüttkante (3) aufweist, über welche die Nutzlast schüttbar ist, wenn sich die Mulde (2) in ihrer Entladestellung befindet,
und wobei an der Mulde (2) eine beweglich gelagerte Schütte (8) vorgesehen ist,
welche zwischen einer eingezogenen Transportstellung und einer ausgefahrenen Entladestellung beweglich ist, und wobei die Schütte (8) in ihrer Entladestellung die Mulde (2) über deren Schüttkante (3) hinaus und in Längsrichtung der Mulde verlängernd angeordnet ist, derart, dass durch die Schütte (8) die für das Entladen der Mulde (2) wirksame Kante, über welche das Schüttgut von dem Nutzfahrzeug abfließt, parallel verlagert ist,
und wobei die Schütte (8) in ihrer Transportstellung die Mulde (2) weniger weit verlängernd angeordnet ist,
**dadurch gekennzeichnet,**
**dass** die Mulde (2) um eine Hochachse schwenkbeweglich gelagert ist.

2. Nutzfahrzeug nach Anspruch 1,
**dadurch gekennzeichnet,**
**dass** die Schütte (8) in ihrer Transportstellung innerhalb der von der Mulde (2) abgedeckten Grundfläche angeordnet ist.

3. Nutzfahrzeug nach Anspruch 1 oder 2,
**dadurch gekennzeichnet,**
**dass** die Schütte (8) unterhalb der Mulde (2) angeordnet ist.

4. Nutzfahrzeug nach Anspruch 1 oder 2,
**dadurch gekennzeichnet,**
**dass** die Schütte (8) innerhalb der Mulde (2) angeordnet ist, wobei die auf die Schütte (8) einwirkenden Antriebsmittel unterhalb der Mulde (2) angeordnet sind.

5. Nutzfahrzeug nach einem der vorhergehenden Ansprüche,
**dadurch gekennzeichnet,**
**dass** die Schütte (8) hydraulisch zwischen ihren Transport- und Entladestellungen beweglich ist.

6. Nutzfahrzeug nach einem der vorhergehenden Ansprüche,
**dadurch gekennzeichnet,**
**dass** das Nutzfahrzeug (1) als Dumper ausgestaltet ist.

7. Nutzfahrzeug nach einem der vorhergehenden Ansprüche, **dadurch gekennzeichnet,**
**dass** die Mulde (2) eine Bodenfläche aufweist und die Schütte (8) zwischen ihrer Transportstellung und ihrer Entladestellung in Längsrichtung der Bodenfläche verschiebbar ist.

8. Nutzfahrzeug nach einem der vorhergehenden Ansprüche,
**dadurch gekennzeichnet,**
**dass** die Mulde (2) eine Bodenfläche aufweist,
und einen die Bodenfläche an drei Seiten umgebenden, sich aufwärts erstreckenden Rand aufweist,
und an einer vierten, die Schüttkante (3) aufweisenden Seite frei von einem Rand offen endet.

## Claims

1. Self-propelled utility vehicle (1) having a driver's cab (15) and a trough (2) for holding the payload, where the trough is mounted to tip in such a way that it can be pivoted between a lower loading and transport position and a raised unloading position, and where the trough (2) has a dumping edge (3) over which the payload can be dumped when the trough (2) is in the unloading position, and where a movably mounted chute (8) is provided on the trough (2), which can be moved between a retracted transport position and an extended unloading position, and where the chute (8), in its unloading position, is arranged to extend the trough in the longitudinal direction of the trough (2) beyond its dumping edge (3), in such a way that, due to the chute (8), the edge used for unloading the trough (2), over which the material flows from the utility vehicle, is displaced to a parallel position, and where the chute (8), in its transport position, is arranged to extend the trough (2) less far, **characterised in that** the trough is mounted so as to pivot around a vertical axis.

2. Utility vehicle in accordance with claim 1, **characterised in that** the chute (8), in its transport position, is arranged within the area covered by the trough (2).

3. Utility vehicle in accordance with claim 1 or claim 2, **characterised in that** the chute (8), is arranged beneath the trough (2).

4. Utility vehicle in accordance with claim 1 or claim 2, **characterised in that** the chute (8), is arranged within the trough (2), where the drive means acting on the chute (8), are arranged beneath the trough (2).

5. Utility vehicle in accordance with any of the preceding claims, **characterised in that** the chute (8) is moved between its transport and unloading positions by hydraulic power.

6. Utility vehicle in accordance with any of the preceding claims, **characterised in that** the utility vehicle (1) is designed as a dump truck.

7. Utility vehicle in accordance with any of the preceding claims, **characterised in that** the trough (2) has a floor surface and the chute (8) can be shifted in the longitudinal direction of the floor surface between its transport and unloading positions.

8. Utility vehicle in accordance with any of the preceding claims, **characterised in that** the trough (2) has a floor surface and an upwardly extending border surrounding the floor surface on three sides while the fourth side provided with the dumping edge (3) is open and has no border.

## Revendications

1. Véhicule utilitaire (1) automoteur muni d'un poste de conduite (15), d'une benne (2) recevant la charge utile, sachant que la benne (2) se trouve en appui pivotant lui permettant de basculer entre une position de chargement et de transport abaissée et une position de déchargement soulevée, et sachant que la benne (2) présente un bord de déversement (3) via lequel la charge utile peut être déversée lorsque la benne (2) se trouve sur sa position de déchargement, et sachant que contre la benne (2) est prévue une goulotte (8) en appui mobile pouvant se déplacer entre une position de transport rentrée et une position de déchargement sortie, et sachant que la goulotte (8) en position de déchargement est disposée au-delà du bord de déversement (3) de la benne (2) et qu'elle prolonge la benne dans le sens longitudinal, de sorte qu'en raison de la goulotte (8) le bord efficace servant au déchargement de la benne (2) - bord via lequel le produit en vrac s'écoule du véhicule utilitaire - est déplacé parallèlement, et sachant que la goulotte (8) est disposée, lorsqu'en position de transport, de façon à prolonger moins loin la benne (2), **caractérisé en ce que** la benne (2) est en appui autour d'un axe vertical lui permettant de basculer.

2. Véhicule utilitaire selon la revendication 1, **caractérisé en ce que** la goulotte (8) lorsqu'en position de transport est disposée à l'intérieur de la surface de base recouverte par la benne (2).

3. Véhicule utilitaire selon la revendication 1 ou 2, **caractérisé en ce que** la goulotte (8) est disposée en dessous de la benne (2).

4. Véhicule utilitaire selon la revendication 1 ou 2, **caractérisé en ce que** la goulotte (8) est disposée à l'intérieur de la benne (2), sachant que les moyens d'entraînement qui agissent sur la goulotte (8) sont disposés en dessous de la benne (2).

5. Véhicule utilitaire selon l'une des revendications précédentes, **caractérisé en ce que** la goulotte (8) est déplacée par une commande hydraulique entre ses positions de transport et de déchargement.

6. Véhicule utilitaire selon l'une des revendications précédentes, **caractérisé en ce que** le véhicule utilitaire (1) est configuré en dumper.

7. Véhicule utilitaire selon l'une des revendications précédentes, **caractérisé en ce que** la benne (2) présente une surface de fond et que la goulotte (8) est déplaçable entre sa position de transport et sa position de déchargement dans le sens longitudinal de la surface de fond.

8. Véhicule utilitaire selon l'une des revendications précédentes, **caractérisé en ce que** la benne (2) présente une surface de fond et qu'elle présente un bord montant qui entoure la surface de fond sur trois côtés, et **en ce qu'**un quatrième côté, celui présentant le bord (3) de la goulotte, se termine ouvert sans présenter de bord montant.
